# EUROPEAN PATENT APPLICATION

(11) **EP 2 521 349 A1**
(43) Date of publication of application: **07.11.2012**
(21) Application number: 11164686.5
(22) Date of filing: 03.05.2011
(51) Int. Cl.: H04N 7/10

(54) **TV signal distribution management systems**

(71) Applicant: Unitron, 8970 Poperinge (BE)
(72) Inventor: Deleu, Stephen, 9080, Beervelde (BE); Gheeraert, Stephane, 7780, Comines-Warneton (BE); Wittouck, Gert, 8610, Kortemark (BE)
(74) Representative: Mackett, Margaret Dawn

(57) **Abstract**

TV signal distribution management system comprising a TV signal reception and distribution network (100; 200; 300) at a client location and a programming unit (160; 260; 360). Tthe TV signal reception and distribution network comprises: a TV signal distribution connections network (150; 250; 350); a head-end (310) comprising at least one antenna device (320); a plurality of remotely programmable devices (311-313, 321-323) provided in the head-end or downstream therefrom; and at least one interface device (391-393, 394) provided for establishing communication between the remotely programmable devices and the programming unit (360). Each remotely programmable device is provided with a driver which is compatible with the programming unit (360), contains the programmable settings and is capable of providing feedback. The programming unit (360) comprises a management application.

## Description

### Technical field

The present invention relates to a TV signal distribution management system according to the preamble of the first independent claim.

The present invention further relates to a method for managing a TV signal reception and distribution network at a client location according to the preamble of the second independent claim.

### Background art

It is known to use filter devices for the selection of TV channels from signals received from aerials and satellite dishes mounted on the premises in which the TV is located, as well as signals provided via cable networks. Most filter devices are programmable by means of a programming unit which may be integrally formed with the filter device or may be connectable to the filter device for programming and then removed.

EP-A-1418760 describes a system for remote management and control of distribution systems for TV signals inside buildings. The system comprises a distribution unit connected to a coax distribution network for distributing TV signals. The same network is used to provide control signals to other electronically controlled devices inside the building. A TCP/IP network is also provided for electronically controlled devices not connected to the coax distribution network. The distribution unit is connected to an aerial and/or a satellite dish for receiving TV signals and for connecting them to the coax distribution network. The distribution unit is also connected to receive mobile telecommunications signals, such as, global system for mobile communications, formerly known as Groupe Spécial Mobile, (GSM) or general packet radio service (GPRS). These telecommunications signals are linked to the TCP/IP network via an interface to allow bi-directional communication, that is, both receiving and transmitting using either GSM or GPRS.

WO-A-2004/098190 describes a networked multimedia system in which a set-top terminal communicates with at least one remote device either by a coax connection or using a broadband connection in a local network. The local network is connectable to at least one server to receive data therefrom via a hybrid fibre/coax network.

WO-A-2010/136465 describes a TV signal distribution system comprising a coaxial network to which are connected a filter circuit device, an interface and an end-user TV. A programming unit can be connected to the coaxial network to enable programming of the filter device over the network. Communications signals used on the coaxial network are at a frequency outside the bands used for transferring TV signals from the filter device to the TV.

### Disclosure of the invention

It is an object of the present invention to provide a TV signal distribution management system with which the programming of the plurality of remotely programmable devices installed at the client location can be facilitated.

This object is achieved with the system comprising the technical characteristics of the first independent claim.

It is a further object of the present invention to provide a simplified method for managing a TV signal reception and distribution network at a client location.

This further object is achieved with the method comprising the technical steps of the second independent claim.

According to the invention, a management system and method are provided which are adapted for enabling hardware manufacturers/suppliers to (re)program settings of their remotely programmable devices which are provided in a TV signal reception and distribution network at a client location, i.e. a local network extending typically over one or only a few buildings and providing TV signals to a number of TV devices, e.g. between 1 and 5000 TV devices, typically between 10 and 1000 TV devices. The invention does not extend to management systems and methods covering nationwide TV signal distribution networks which are managed by service providers, such as Telenet and Belgacom in Belgium.

As used herein, with "TV device" is intended to mean an end-user TV set or a computer or any other electronic device appropriately equipped for displaying TV signals to users.

As used herein, with "remotely programmable device" is intended to mean a programmable device which is capable of communication over a communications link with a programming unit for the purposes of programming the remotely programmable device.

The TV signal reception and distribution network at a client location which is managed according to the invention comprises:
- a TV signal distribution connections network, i.e. a network of (cable or wireless) connections between the various devices in the network;
- a head-end connected to the TV signal distribution connections network comprising at least one antenna device for receiving aired TV signals (i.e at least part of the TV signals which are distributed are received over the air);
- a plurality of remotely programmable devices provided in the head-end or downstream therefrom in the TV signal distribution connections network and operable for treating the received TV signals and transmitting them over the TV signal distribution connections network towards one or more TV devices; and
- at least one interface device connected to the TV signal distribution connections network and provided for establishing communication between the remotely programmable devices and a programming unit.

The management system and method of the invention make use of this programming unit, connectable to the TV signal reception and distribution network, for programming the remotely programmable devices.

A difficulty with which the inventors of this invention were faced is that there is a wide range of remotely programmable devices of which it is desired to be able to program all of them with the same programming unit. This difficulty has been overcome according to the invention by providing each remotely programmable device with a driver compatible with the programming unit. This driver contains the programmable settings of the respective device for its treatment of TV signals and has a capability of providing feedback of the TV signals transmitted by the device. Further according to the invention the programming unit comprises a management application provided for managing the settings of each remotely programmable device in the TV signal reception and distribution network.

So by developing the driver and the management application, a system and method have been obtained by means of which all the remotely programmable devices in the TV signal reception and distribution network can be programmed by means of the same programming unit. With this programming unit, the user can more easily obtain an overview of the entire TV signal reception and distribution network at that client location. As a result, the programming of these devices can be highly facilitated, as the user can more quickly see the effect of any change in settings on the TV signals transmitted by the respective device. A wrong setting in one of the remotely programmable devices can affect the signal quality throughout a large part of the TV signal reception and distribution network. With the management system and method according to the invention, such wrong settings can be detected more easily or more quickly, so the invention has the additional effect that more correct settings of the devices in the TV signal reception and distribution network can be achieved.

In preferred embodiments, a detection algorithm is provided for detecting which remotely programmable devices are connected to the TV signal reception and distribution network. This has the advantage that the user does not have to add each device manually into the management application.

In preferred embodiments, the detection algorithm is provided for detecting tree structures for subsets of the plurality of remotely programmable devices according to their location in the TV signal distribution connections network. This has the advantage that the system can detect for example which remotely programmable devices are connected behind which interface device, so that these devices can be treated as one group.

In preferred embodiments, the management application comprises a user interface comprising a first part for displaying the detected remotely programmable devices and tree structures and a second part in which the user can define further connections between the detected remotely programmable devices and tree structures to graphically rebuild the TV signal reception and distribution network of the client location. This provides the capability of obtaining a graphic overview of the entire TV signal reception and distribution network at the respective client location, which can further facilitate the programming of the devices in this network.

In preferred embodiments, the management application is provided for storing a history of settings and/or network topologies which have been used at previous client locations. This has the advantage that the user can easily look up settings or network topologies which he has used before, which can help to build his experience.

In embodiments according to the invention, each of the remotely programmable devices is one of the following group of devices: a programmable filter device comprising at least one filter for filtering one or more TV channels from the received TV signals, a tuner-demodulator unit for demodulating received TV signals, a multiswitch, an MPEG encoder or decoder, a programmable amplifier, a frequency converter device, or any other remotely programmable device for treatment of TV signals known to the person skilled in the art.

In embodiments according to the invention, the interface device(s) can be a separate device such as for example a converter box for converting incoming communication signals to signals for transmission over the TV signal distribution connections network in a frequency spectrum outside that which is used for the distribution of the TV signals, e.g. an Ethernet to coax converter box.

In embodiments according to the invention, the interface device(s) can also be an interface device integrated into one of the remotely programmable devices. Typically, the remotely programmable devices which are placed in the head-end have an integrated interface device for communicating with the programming unit.

### Brief description of the drawings

The invention will be further elucidated by means of the following description and the appended figures:-
Figure 1 illustrates a block diagram of one embodiment of a TV signal distribution management system in accordance with the present invention;
Figure 2 illustrates a block diagram of another embodiment of a TV signal distribution management system in accordance with the present invention;
Figure 3 illustrates a block diagram of a preferred embodiment of a TV signal distribution management system in accordance with the present invention;
Figure 4 illustrates a screen shot of a 'Locations' page of a management application in accordance with the present invention;
Figure 5 illustrates a screen shot of a 'Welcome' page for a particular location;
Figure 6 illustrates a screen shot of a 'Product information' page for a device that is to be added to an installation at the particular location;
Figure 7 illustrates a screen shot of a 'Details' page for the device that is to be added to the installation; and
Figure 8 illustrates a screen shot of an 'AGC' page for the device that is to be added to the installation.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

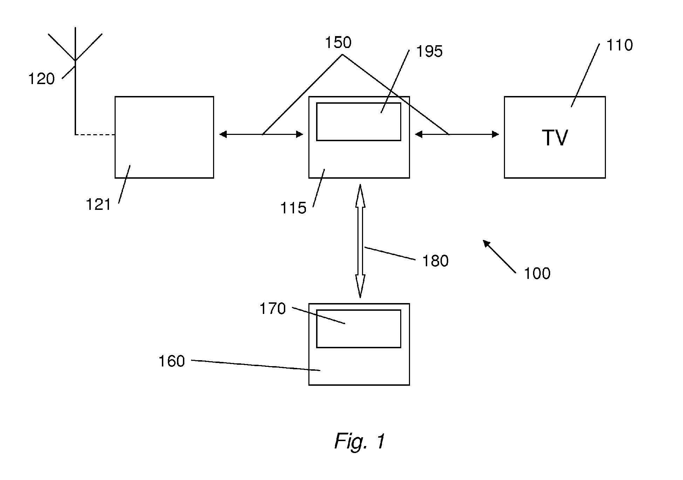

Referring initially to Figure 1, a first embodiment of a TV signal distribution management system is shown, comprising a TV signal reception and distribution system 100 and a programming unit 160. The TV signal reception and distribution system 100 comprises a head-end with at least an antenna device 120, i.e. an aerial or a satellite dish, and may further include a cable connection through which incoming signals are received from a service provider that provides such signals. The received TV signals are transmitted downstream towards an end user TV set 110. Downstream from the head-end, one or more remotely programmable devices 121 is provided, each having a specific function for applying a given treatment to the incoming TV signals, such as for example one or more of the following: filtering, frequency up/downconversion, demodulation, switching from one of its inputs to one of its outputs, etc. The settings of this treatment are programmable by means of the programming unit 160. To this end, the settings are defined in a driver, which is also capable of providing feedback of the signals output by the device 121 towards the programming unit 160.

The remotely programmable unit(s) 121 have no integrated interface device for connecting to the programming unit. Instead, the connection is provided via a dedicated interface device 115 which has a modem 195 for communicating with the modem 170 of the programming unit 160, in this case via a cable 180 such as for example a USB cable or an Ethernet cable or the like. The dedicated interface device 115 is equipped for putting communication signals received from the programming unit 160 on the connections network 150 which interconnects the devices of the TV signal reception and distribution system 100. For example, in the case of a coaxial network 150, communication between the interface 115 and the programmable device 121 can be effected using any suitable frequency that does not interfere with the transmission of TV signals towards the end user TV 110. Although a single end user TV 110 is shown, it will be appreciated that any number of such devices can be connected to the TV signal distribution network 100.

The system 100 is managed by connecting the programming unit 160 to the dedicated interface device 115 at the premises of the client location. So the user of the programming unit 160 visits the client location for changing the settings of the remotely programmable device(s) 121.

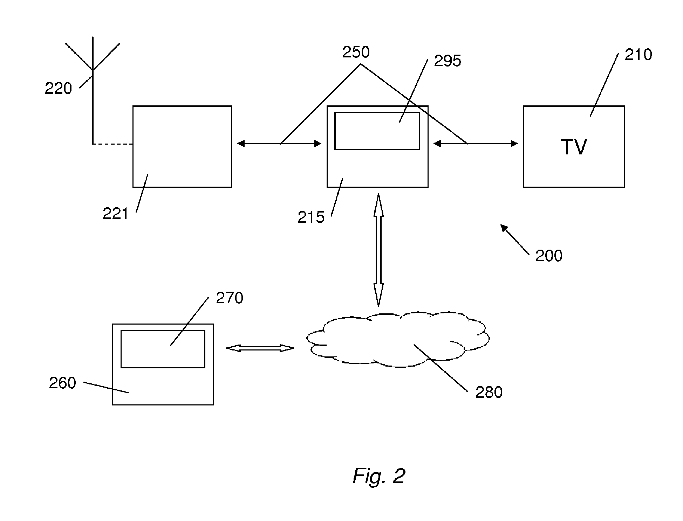

Referring to Figure 2, a second embodiment of a TV signal distribution management system is shown, comprising a TV signal reception and distribution system 200 and a programming unit 260. The TV signal reception and distribution system 200 comprises a head-end with at least an antenna device 220, i.e. an aerial or a satellite dish, and may further include a cable connection through which incoming signals are received from a service provider that provides such signals. The received TV signals are transmitted downstream towards an end user TV set 210. Downstream from the head-end, one or more remotely programmable devices 221 is provided, each having a specific function for applying a given treatment to the incoming TV signals, such as for example one or more of the following: filtering, frequency up/downconversion, demodulation, switching from one of its inputs to one of its outputs, etc. The settings of this treatment are programmable by means of the programming unit 260. To this end, the settings are defined in a driver, which is also capable of providing feedback of the signals output by the device 221 towards the programming unit 260.

The remotely programmable unit(s) 221 have no integrated interface device for connecting to the programming unit. Instead, the connection is provided via a dedicated interface device 215 which has a modem 295 for communicating with the modem 270 of the programming unit 260. The dedicated interface device 215 is equipped for putting communication signals received from the programming unit 260 on the connections network 250 which interconnects the devices of the TV signal reception and distribution system 200. For example, in the case of a coaxial network 250, communication between the interface 215 and the programmable device 221 can be effected using any suitable frequency that does not interfere with the transmission of TV signals towards the end user TV 210. Although a single end user TV 210 is shown, it will be appreciated that any number of such devices can be connected to the TV signal distribution network 200.

The system 200 is managed by remotely connecting the programming unit 260 to the dedicated interface device 215 without visiting the premises of the client location. Modems 270 and 295 communicate over a communications network 280 as shown, for example by means of an internet connection over a landline (broadband connection or a digital subscriber line (DSL)), or using a mobile telecommunications network such as global system for mobile telecommunication (GSM) or general packet radio service (GPRS).

In alternative embodiments to the systems of figures 1 and 2, a proximity wireless connection can also be used, such as for example Bluetooth (registered trademark of the Bluetooth Special Interest Group) or Wi-Fi (registered trademark of the Wi-Fi Alliance).

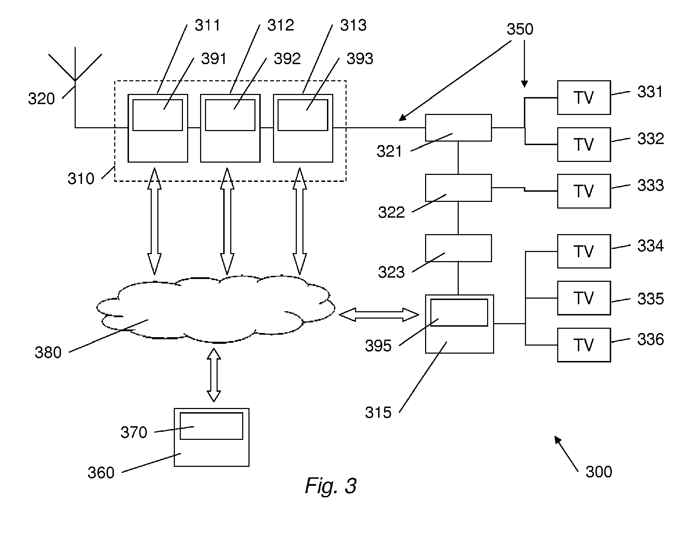

In the TV signal distribution systems described with reference to Figures 1 and 2, the filter devices are programmed via a dedicated interface device located on the TV signal distribution network. However, it will be appreciated that the interface may be located anywhere on the TV signal reception and distribution network as will be described below with reference to Figure 3.

Figure 3 illustrates a TV signal reception and distribution system 300 at a client location, comprising a head-end 310 to which an aerial 320 is connected to receive TV signals for transmission to end-user TV sets 331-336 via a coaxial network 350. Note that multiple network branches may be connected to the head-end 310, only one of which is shown. Although the head-end 310 is shown connected to an aerial 320, it will be appreciated that the head-end 310 may be connected to a satellite dish or a cable connection over which TV signals are provided for transmission to the end-user TV sets over the TV signal distribution system 300. It will also be appreciated that the TV signals may be transmitted over any suitable TV signal distribution connections network and is not limited to a coaxial network.

A first set of remotely programmable devices 311, 312, 313 is provided in the head-end 310. A second set of remotely programmable devices 321, 322, 323 is provided downstream from the head-end in the coaxial network 350, each connecting to one or more of the TV sets 331-336. The remotely programmable devices 311, 312, 313 of the first set have each an integrated interface device 311, 312, 313, e.g. a modem, for communicating with a programming unit 360. The remotely programmable devices 321, 322, 323 communicate with the programming unit 360 via the separate interface device 315 in the same way as in the embodiment of figure 2. The modems 391, 392, 393, 395 may communicate with the modem 370 of the programming unit 360 over any suitable telecommunications link as described above.

Each of the remotely programmable devices 311-313, 321-323 has a specific function for applying a given treatment to the incoming TV signals, such as for example one or more of the following: filtering, frequency up/downconversion, demodulation, switching from one of its inputs to one of its outputs, etc. The settings of this treatment are programmable by means of the programming unit 360. To this end, the settings are defined in a driver, which is also capable of providing feedback of the signals output by the respective device 311-313, 321-323 towards the programming unit 360.

The programming units 160, 260, 360 mentioned above may comprise an application-specific device for programming the remotely programmable devices, but it is preferred that the programming unit is implemented on a computer device, for example, a personal computer, a server, a laptop computer, a tablet or a smart phone or any other portable computing device. In each case, a management application is provided that enables an installation engineer or user using the computer device to program the remotely programmable devices remotely over the respectively established communication links.

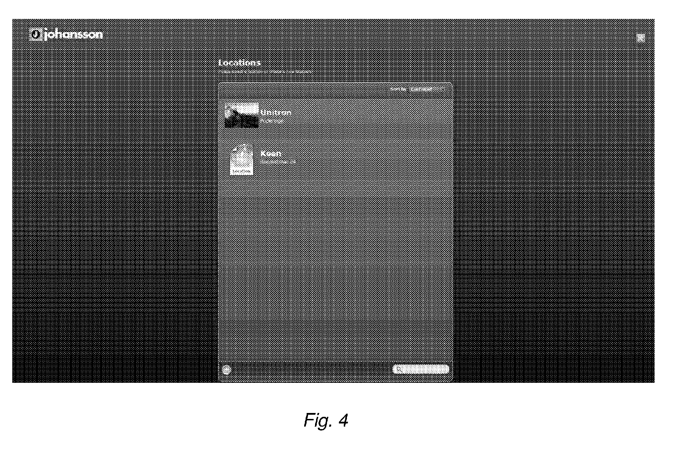

Operation of the programming unit 160, 260, 360 in conjunction with the remotely programmable devices is shown in Figures 4 to 8 below. In Figures 4 to 8, a sequence of steps are illustrated that are performed by the programming unit 160, 260, 360 when connected to the TV signal reception and distribution network 100, 200, 300. In these Figures, screen shots are shown that would be displayed for a user using the programming unit 160, 260, 360 to program a new filter device within a new or existing installation. It will be appreciated that the layout of each screen or page can be configured to the requirements of each user or group of users, for example, installation engineers belonging to a specific company.

Figure 4 illustrates a 'Locations' screen or page for the application. This is effectively the 'Home' page for the application. Here, a history of the locations where an installation has been made by the user is listed. An icon represents each location and access to data relating to each installation at that location can be made by selecting the relevant icon as will be described in more detail below.

In addition to being able to select an existing installation, it is also possible to add a new installation by selecting the '+' icon at the bottom left hand corner of the screen. A search function is provided on the bottom right hand side of the screen, and a sort function at the top right hand side of the screen. These are normal functions available on computer displays are interfaces and are not described in detail here.

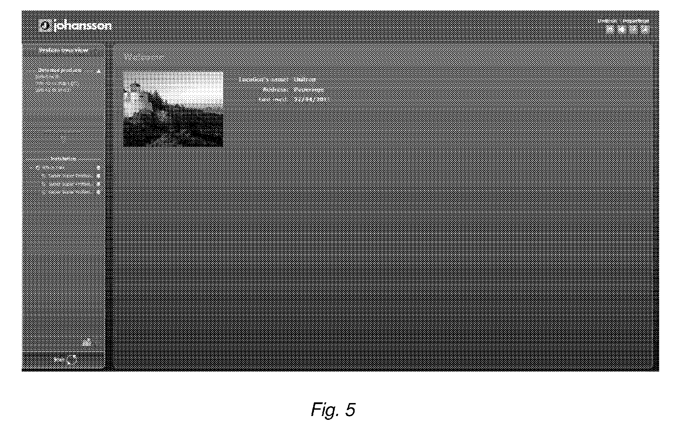

Having selected a location, in this case, 'Unitron', a page relating to the installation at the particular 'Unitron' location is displayed as shown in Figure 5. This layout is the same for each location and is divided into a 'Welcome' window and a 'System overview' window. In the 'Welcome' window, details of the location are provided in addition to the date that the installation was last accessed. Other information relating to the location can also be provided in the 'Welcome' window.

In the 'System overview' window, a 'Detected products' list is provided together with an 'Installation' list that corresponds to the list of products present in the installation the last time the installation was accessed. A 'Scan' function is provided that allows the user to update the installation details, i.e. this triggers a detection algorithm to detect the remotely programmable devices connected to the network at that client location. For each item in the installation, the bullet on the right hand side indicates the status of the associated device and the colour of the bullet on the left hand side indicates its connection status, for example, green indicates that the associated device is operating within predetermined parameters, yellow indicates that the associated device is operating by its temperature is higher than it should be, and red indicates that the temperature is too high and there is a risk of failure of the associated device. Naturally, other status factors may also be considered in the colour coding of the bullet.

If a new product is to be added to the 'Installation' list, the user can select it from the 'Detected products' list and then select 'Add to Installation'. Alternatively, the selected product can be added to the 'Installation' list using "drag and drop". It will be appreciated that the new device which is to be programmed needs to be physically connected to the coax distribution network before it can be programmed.

The 'Installation' list provides a graphic overview of the entire network at that client location. In building this graphic overview by putting the detected products in this installation list, detected tree structures are maintained, so the user is assisted in building this graphic overview.

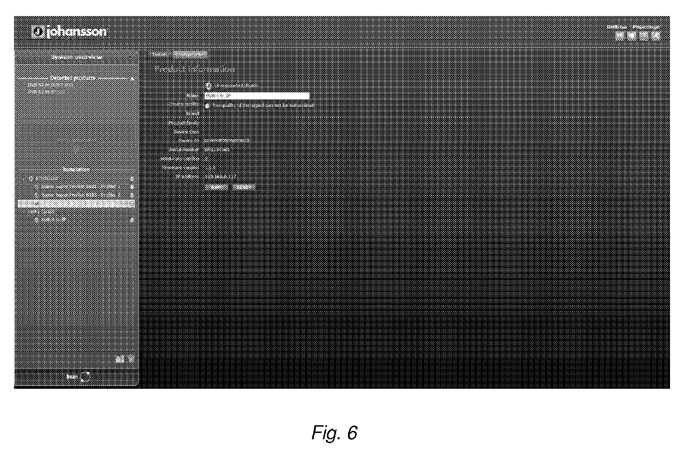

Once the selected product has been added to the 'Installation' list, it needs to be configured for use. As shown in Figure 5, if the first item in the 'Detected products' list is selected, 'DVB-S to IP', and added to the 'Installation' list, it forms part of a 'Super Super Profiler' on an 'ETH2COAX' network at the location, in this case, 'Super Super Profiler 6631 - Profiler 3' as shown. For the selected product, 'DVB-5 to IP', a configuration page is obtained as shown in Figure 6.

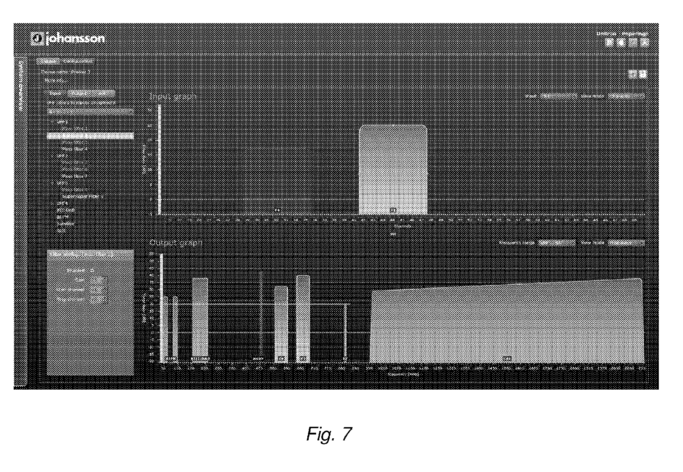

In Figure 6, two windows are shown, the 'System overview' window described with reference to Figure 5, and a 'Product information' window. The 'System overview' window now includes the new product in the 'Installation' list but it has a warning that it needs to be configured. In the 'Product information' window, there are two tabs that need to be selected in turn to configure the new device for the installation. The first tab, 'Configuration', is shown in Figure 6. Here, the details relating to the new device are listed including its name, its specific ID, its serial number, the hardware and firmware versions and its IP address are listed. If they are correct, the details can be saved by selecting 'SAVE'. The second tab, 'Details', is shown in Figure 7.

In Figure 7, the UHF filters need to be assigned to the respective inputs. When 'Pass filter 2' for UHF 1 is selected as shown in the list on the left hand side of the page, it is highlighted in an 'Input graph' as shown. The 'Input graph' indicates filter gain against channel. Its 'Filter settings' are also shown, bottom left hand corner of the page, which indicates the gain and the range of channels, in this case, channel 41 to channel 47. The 'Input graph' also shown 'Pass filter 4' and its associated channels, channel 29 to channel 35. Additionally, other filters available in the device for other UHF bands are shown as being available for selection. In UHF2 and UHF3, 'Pass filter 7' and 'Super Super Filter 9' respectively are available and in UHF4 all the options there are available for selection.

Three tabs are provided for selecting 'Input', 'Output' and 'AGC'. In Figure 7, the 'Output' tab is selected and the 'Output graph' is more prominent on the page than the 'Input graph'. The 'Output graph' illustrates total gain against frequency and shown the frequency ranges for each of the filters that can be selected. 'SAT' refers to satellite frequencies and comprises a substantially bigger block than the UHF channels due to the number of different frequencies that can be received when compared to UHF etc.

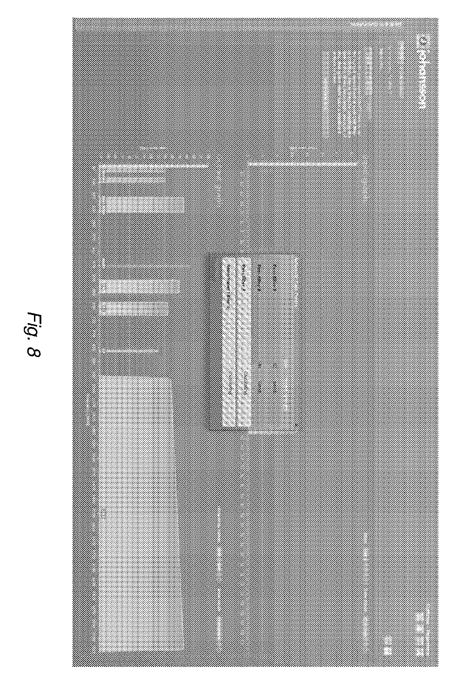

When the 'AGC' tab is selected, as shown in Figure 8, an option is provided called 'PERFORM AGC'. When this is option is selected, the automatic gain control (AGC) for the device is performed. As shown, 'Pass filter 2' and 'Pass filter 4' have gain values and signal strengths whilst the gain and signal strength values for 'Pass filter 7' and 'Super Super Filter 9' are still being calculated. Once calculated, the newly installed device is ready for use.

In Figures 7 and 8, the 'System overview' window has been minimised so that the window in which the 'Details' tab is shown can be maximised to assist the user.

So in accordance with the present invention, a TV distribution management system is provided which enables a user to install and configure a new device that is already connected to the TV signal reception and distribution network at a specific location by connecting to the device remotely. As described above, the connection may be via a communications link established at the client location or a remote connection over a telecommunications network.

Moreover, the programming device 360 acts as a location management system for a user as it records and stores information relating to each installation, i.e. a history of previously used settings and network topologies. In addition, the programming device 360 also updates that information relating to each installation each time it connects to the network at that location.

## Claims

1. A TV signal distribution management system comprising a TV signal reception and distribution network (100; 200; 300) at a client location and a programming unit (160; 260; 360) connectable to the TV signal reception and distribution network, the TV signal reception and distribution network comprising:
a TV signal distribution connections network (150; 250; 350);
a head-end (310) connected to the TV signal distribution connections network (350) and comprising at least one antenna device (320) for receiving aired TV signals;
a plurality of remotely programmable devices (311-313, 321-323) provided in the head-end or downstream therefrom in the TV signal distribution connections network and operable for treating the received TV signals and transmitting them over the TV signal distribution connections network towards one or more TV devices (331-336); and
at least one interface device (391-393, 394) connected to the TV signal distribution connections network (350) and provided for establishing communication between the remotely programmable devices and the programming unit (360);
**characterised in that** each remotely programmable device is provided with a driver which is compatible with the programming unit (360), contains programmable settings for the treatment of TV signals by the device and is capable of providing feedback of the TV signals transmitted by the device,
and **in that** the programming unit (360) comprises a management application provided for managing the settings of each remotely programmable device in the TV signal reception and distribution network.

2. A system according to claim 1, wherein a detection algorithm is provided for detecting which remotely programmable devices are connected to the TV signal reception and distribution network.

3. A system according to claim 2, wherein the detection algorithm is provided for detecting tree structures for subsets of the plurality of remotely programmable devices according to their location in the TV signal distribution connections network.

4. A system according to claim 3, wherein the management application comprises a user interface comprising a first part for displaying the detected remotely programmable devices and tree structures and a second part in which the user can define further connections between the detected remotely programmable devices and tree structures to graphically rebuild the TV signal reception and distribution network of the client location.

5. A system according to any one of the preceding claims, wherein the management application is provided for storing a history of settings and/or network topologies which have been used at previous client locations.

6. A system according to any one of the preceding claims, wherein each of the remotely programmable devices is one of the following group of devices: a programmable filter device comprising at least one filter for filtering one or more TV channels from the received TV signals, a tuner-demodulator unit for demodulating received TV signals, a multiswitch, an MPEG encoder or decoder, a programmable amplifier, a frequency converter device.

7. A system according to any one of the preceding claims, wherein the TV signal distribution connections network (350) comprises a coaxial distribution network.

8. A method for managing a TV signal reception and distribution network at a client location, the TV signal reception and distribution network comprising:
a TV signal distribution connections network (350);
a head-end connected to the TV signal distribution connections network (350) comprising at least one antenna device (320) for receiving aired TV signals;
a plurality of remotely programmable devices (310) provided in the head-end or downstream therefrom in the TV signal distribution connections network and operable for treating the received TV signals and transmitting them over the TV signal distribution connections network (350) towards one or more TV devices (320, 330, 340); and
at least one interface device connected to the TV signal distribution connections network (350) and provided for establishing communication between the remotely programmable devices and the programming unit (360);
the method comprising the step of connecting a programming unit (360) to the interface device and establishing communication between the remotely programmable devices and the programming unit (360);
**characterised in that** the method comprises the step of managing the settings of each remotely programmable device in the TV signal reception and distribution network by means of a management system on the programming unit (360) and drivers of the remotely programmable devices (310) which are compatible with the programming unit (360) and contain programmable settings for the treatment of TV signals by the device and provide feedback of the TV signals transmitted by the device.

9. The method according to claim 8, further comprising the step of detecting which remotely programmable devices are connected to the TV signal reception and distribution network.

10. The method according to claim 9, further comprising the step of detecting tree structures for subsets of the plurality of remotely programmable devices according to their location in the TV signal distribution connections network.

11. The method according to claim 10, further comprising the step of displaying the detected remotely programmable devices and tree structures in a first part of a user interface and defining further connections between the detected remotely programmable devices and tree structures in a second part of the user interface to graphically rebuild the TV signal reception and distribution network of the client location.

12. The method according to any one of the claims 8-11, further comprising the step of storing a history of settings which have been used at previous client locations.
